# FASCICULE DE BREVET EUROPEEN

(11) **EP 4 375 767 B1**
(45) Date de publication et mention de la délivrance du brevet: **08.04.2026**
(21) Numéro de dépôt: 23195662.4
(22) Date de dépôt: 06.09.2023
(51) Int. Cl.: G04D 7/12

(54) **SUPPORT DE MESURE POUR MOUVEMENT D'HORLOGERIE**
MESSTRÄGER FÜR UHRWERK
MEASURING SUPPORT FOR A CLOCK MOVEMENT

(30) Priorité: 24.11.2022 EP 22209441
(43) Date de publication de la demande: 29.05.2024
(73) Titulaire: Omega SA, 2502 Bienne (CH)
(72) Inventeur: LEHMANN, José, 2022 Bevaix (CH); NICOLAS, Cédric, 2000 Neuchâtel (CH)
(74) Mandataire: ICB SA

(56) Documents cités:
- EP-A1- 2 434 352
- EP-A1- 3 812 847
- CH-A4- 272 162
- DE-U1- 202017 101 430
- FR-A1- 2 059 696
- US-A- 5 988 871

## Description

### Domaine technique de l'invention

L'invention concerne un support de mesure pour mouvement d'horlogerie, agencé pour constituer un appui radial, selon une direction radiale, d'un organe de commande ou d'une zone d'appui, que comporte une tête de montre comportant un mouvement d'horlogerie, ou que comporte un mouvement d'horlogerie renfermé dans une calotte de test, dans une position d'appui radial sous contrainte de ladite tête de montre ou respectivement de ladite calotte sur ledit support de mesure.

L'invention concerne le domaine du contrôle des mouvements d'horlogerie, en particulier du contrôle de marche et/ou d'amplitude des mouvements mécaniques.

### Arrière-plan technologique

Pour contrôler et mesurer la marche et/ou l'amplitude d'un mouvement d'horlogerie, il est connu d'effectuer un contrôle acoustique, pour capter le son émis par l'échappement d'un calibre (monté dans une calotte ou emboîté dans une tête de montre) afin de mesurer la marche et l'amplitude du mouvement.

Il existe de nombreuses possibilités pour mesurer les sons (vibrations) émises par un mouvement ou par une montre. Par exemple un microphone de contact comme dans les demandes FR2059696A1 et CH272162A4, un microphone aérien, ou un système optique comme un vibromètre laser sont envisageables.

Le microphone aérien est trop sensible aux bruits environnants et même internes à l'appareil de mesure. Souvent en production horlogère les mouvements sont testés par lots multiples de dix unités: si dix mouvements fonctionnent en même temps, chaque micro ne doit entendre que le mouvement auquel il est dédié, et non les mouvements immédiatement voisin.

Le vibromètre laser est utilisé en laboratoire, mais est un système beaucoup trop cher, complexe et encombrant pour une application en production de série. Il est aussi très sensible aux vibrations et aux variations de l'environnement.

Une solution optique par émission de lumière, par exemple avec une LED, et analyse du signal en réflexion, est plus adaptée à l'intégration de mouvements dans des boîtes de traitement de lots complets, mais le signal en retour est très faible, pratiquement imperceptible, et encore une fois difficile à isoler du bruit ambiant. De plus cette solution est trop consommatrice en énergie pour un système portable tel qu'une boîte porteuse des mouvements et des capteurs associés.

Aussi on utilise généralement pour effectuer de telles mesures un capteur constitué par un élément piézo utilisé en tant que microphone de contact. Les piézos sont disponible en différents types et géométries. Typiquement il existe des piézos sous forme de barreau ou de disque. Et des types simple ou bimorphe (deux piézos superposés). Les barreaux bimorphes sont à priori beaucoup plus sensibles mais plus complexes à contacter et surtout beaucoup plus chers.

Mais, même avec un capteur piézo, si un tel contrôle ne pose pas de difficultés sur un banc statique, il est plus délicat à effectuer sur un objet en mouvement, par exemple sur une calotte ou sur une tête de montre montée dans une boîte et manipulée par un robot ou similaire, ou sur une ligne de fabrication ou de contrôle.

En effet, le piézo est un élément fragile. Venir y appuyer directement l'objet dont on souhaite capter le son pourrait l'endommager. Il faut autant que possible éviter de le soumettre à des contraintes mécaniques.

Il faut donc un élément mécanique qui serve d'interface entre le piézo et le mouvement, et qui permette aussi de tenir en position le piézo dans l'appareil de mesure.

Il faut aussi pouvoir assurer que seul le son provenant du mouvement d'horlogerie soit mesuré par le piézo, et il faut donc isoler autant que possible ce capteur des perturbations externes, notamment des perturbations acoustiques provenant d'autres mouvements en cours de tests à proximité.

### Résumé de l'invention

L'invention se propose d'apporter une solution économique au problème de la tenue d'un capteur piézo pour un contrôle de marche et/ou d'amplitude, notamment embarqué dans une boîte ou tout autre support mobile dans l'espace, et une solution permettant d'atteindre une moindre sensibilité au bruit ambiant que les systèmes actuels.

A cet effet, l'invention concerne un support de mesure selon la revendication 1.

### Brève description des figures

Les buts, avantages et caractéristiques de l'invention seront mieux compris à la lecture de la description détaillée qui va suivre, en référence aux dessins annexés, où :
- la figure 1 représente de façon schématisée, partielle et en coupe, une boîte de mesure et de test, qui renferme, sur la partie gauche de la figure, une calotte munie d'un mouvement d'horlogerie, dans une position de contrôle qui est une position d'appui sous contrainte de cette calotte sur un support de mesure selon l'invention selon une première variante, et, sur la partie droite de la figure, une tête de montre également en position de contrôle, avec le même support de mesure selon la première variante;
- la figure 2 représente la boîte de mesure et de test de la figure 1, selon une coupe perpendiculaire à celle de la figure 1, où l'on voit des têtes de montre en partie gauche de la figure, et des calottes en partie droite de la figure;
- la figure 3 représente de façon schématisée, partielle et en perspective, le support de mesure selon la première variante;
- la figure 4 représente de façon schématisée, partielle et en coupe passant par un axe d'une pointe unique de contact qu'il comporte, le support de mesure selon la première variante ;
Les figures 5 à 9 illustrent un support de mesure selon une deuxième variante, qui comporte deux pointes de contact latérales :

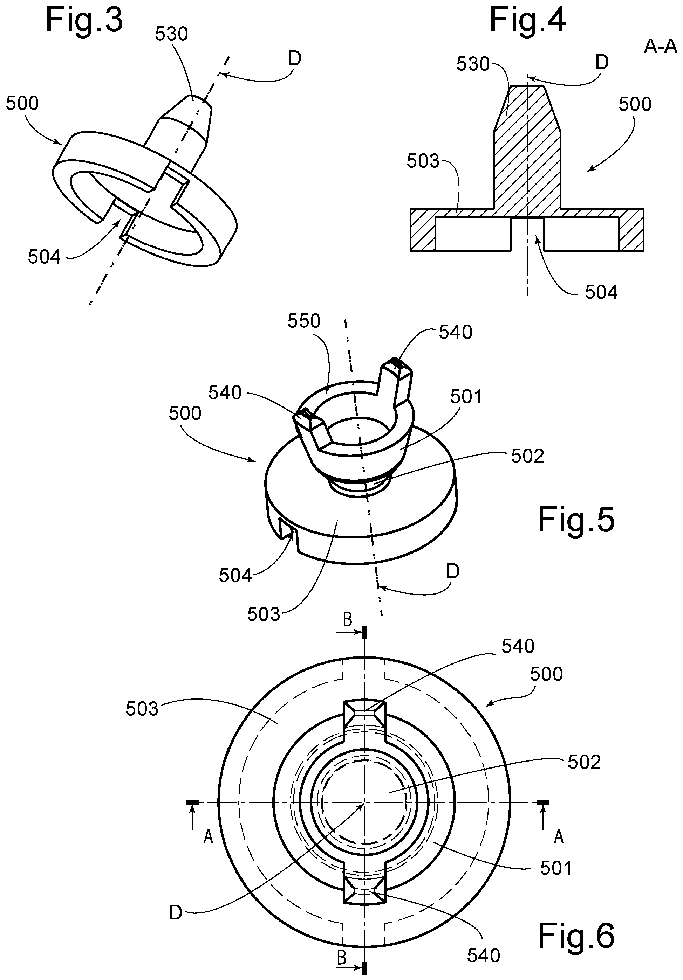

- la figure 5 représente de façon schématisée, partielle et en perspective, le support de mesure selon la deuxième variante;
- la figure 6 représente de façon schématisée, partielle et en vue de dessus, le support de mesure selon la deuxième variante;

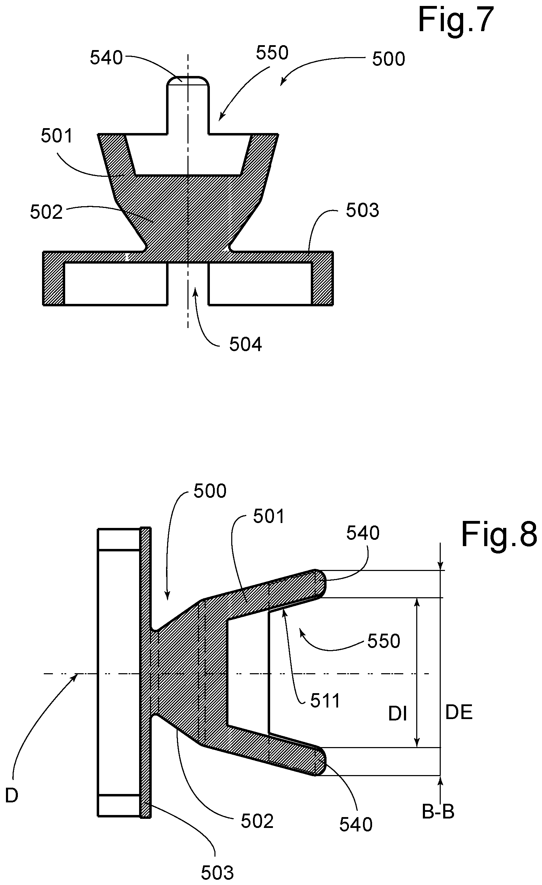

- la figure 7 représente de façon schématisée, partielle et en coupe selon un plan par rapport auquel sont symétriques les deux pointes de contact latérales, le support de mesure selon la deuxième variante;
- la figure 8 représente de façon schématisée, partielle et en coupe selon un plan passant par les deux pointes de contact latérales, le support de mesure selon la deuxième variante;

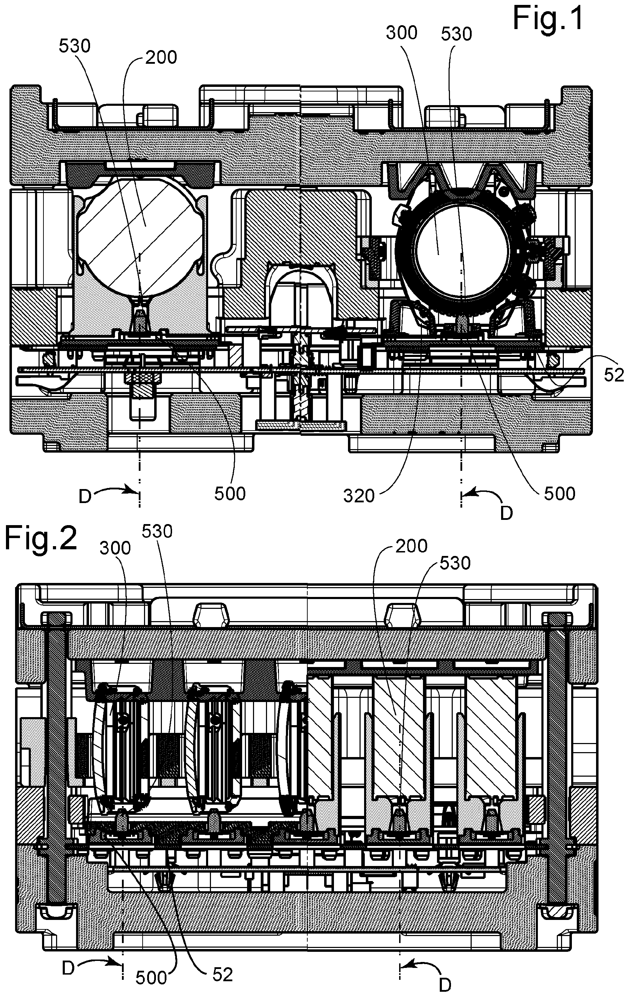

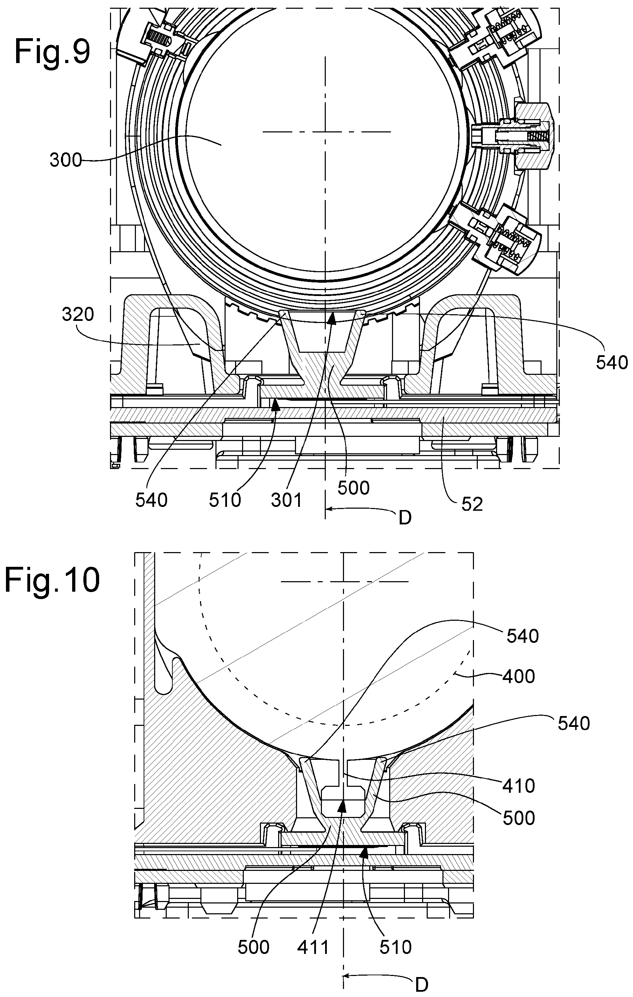

- la figure 9 représente de façon schématisée, partielle et en coupe, de façon similaire à la figure 1, une tête de montre en appui sur un support de mesure selon la deuxième variante, dont les deux pointes de contact latérales sont en appui sur sa carrure, dans un plan parallèle au plan général de la tête de montre;

- la figure 10 représente de façon schématisée, partielle et en coupe, de façon similaire à la figure 1, une calotte renfermant un mouvement, dont la couronne est en appui sur un support de mesure selon la deuxième variante;

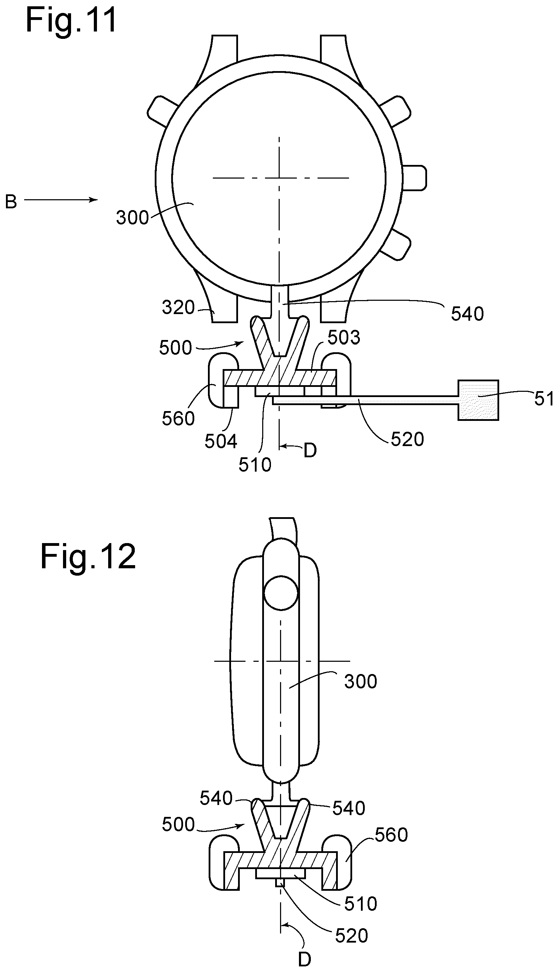

- la figure 11 représente de façon schématisée, partielle et en coupe, de façon similaire à la figure 9, une tête de montre en appui sur un support de mesure selon la deuxième variante, dont les deux pointes de contact latérales sont en appui sur sa carrure, dans un plan perpendiculaire au plan général de la tête de montre;
- la figure 12 représente l'ensemble de la figure 11, en coupe dans un plan perpendiculaire à celui de la figure 11 ;

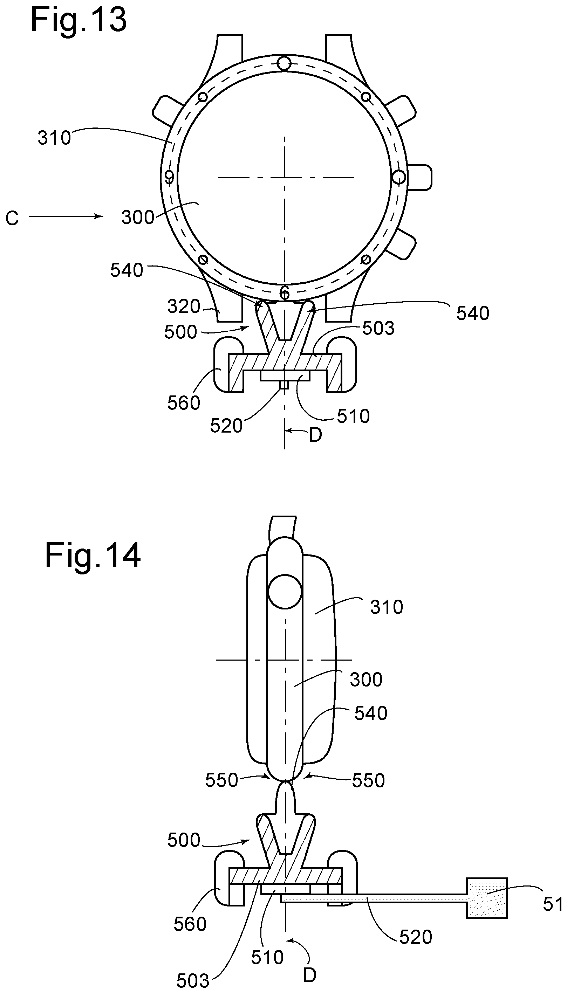

- la figure 13 représente, de façon analogue à la figure 11, le cas où la tête de montre comporte une lunette, et dans lequel les deux pointes de contact latérales permettent d'assurer le contact avec la carrure en évitant tout contact avec la lunette ;
- la figure 14 représente l'ensemble de la figure 13, en coupe dans un plan perpendiculaire à celui de la figure 13 ;

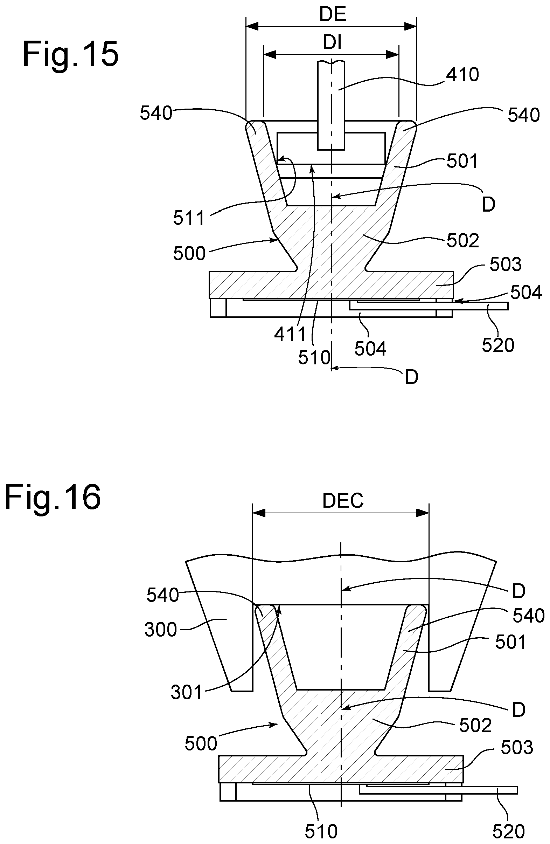

- la figure 15 est un détail de la figure 10 ;
- la figure 16 est un détail de la figure 9.

### Description détaillée de l'invention

Pour apporter une solution efficace à la protection du capteur, l"invention propose de fixer le capteur sur un support de mesure, lequel supporte l'effort mécanique lors de l'appui sur l'élément à contrôler.

Un simple disque piézo produit en grande quantité et bien connu dans l'industrie horlogère (utilisé en tant que buzzer) donne des résultats tout à fait satisfaisants, il est donc utilisable pour une application industrielle. En particulier l'invention s'intéresse à la configuration industrielle dans laquelle des mouvements emboîtés dans des calottes ou montés dans des têtes de montres sont rangés par lots dans des boîtes de transport sur des lignes de fabrication ou de contrôle. De telles boîtes circulent selon des cycles assez longs, de plusieurs jours ou semaines, selon la nature et la fréquence des opérations à effectuer, en particulier pour des opérations de contrôle chronométriques; il s'agit donc de disposer de supports de mesure bon marché, puisqu'ils restent immobilisés sur ces boîtes, et supportant les manipulations sur des convoyeurs, dans des transtockeurs, ou autres moyens de manutention.

La captation du son se faisant par contact, là aussi différentes options existent. Le point de contact entre le capteur et l'objet à mesurer peut varier.

Idéalement le contact doit être le plus direct et rigide possible avec la source qui génère le son. Dans le cas d'un mouvement d'horlogerie, la tige de commande est un élément approprié, et est le seul élément valable pour des mouvements montés en calotte. Pour des mouvements emboîtés dans une tête de montre, il est aussi possible d'obtenir un contact via la boîte, le fond ou la carrure par exemple. Un contact avec la glace n'est pas toujours favorable, en raison des joints d'étanchéité qui amortissent la vibration.

Dans le cas de calottes ou de têtes de montres groupées par lots multiples de 10 dans une boîte de traitement, il faut prévoir des capteurs capables de mesurer cette ou ces dizaines de mouvements (en calotte ou emboîtés), à raison d'un capteur par mouvement, insérés dans une boite de dimensions données.

Une difficulté est de pouvoir venir en contact avec le plus grand nombre de types de montre dont la géométrie est variable. Les dimensions de la boîte imposent de positionner les montres en alignement. Il n'est pas garanti que la tige de commande soit accessible, ni même toujours dans la même position. Pour les mouvements emboîtés, un contrôle réalisé au niveau de l'entre-cornes donne de bons résultats; de plus cette zone permet de tolérer une petite trace ou un matage local sans nuire à l'esthétique de la boîte de montre. Il est de ce fait avantageux d'agencer le capteur pour avoir un contact sur la carrure à l'entre-cornes pour les montres, et sur la tige de commande pour les mouvements en calotte.

Pour que la tête de montre et la calotte puissent être positionnés dans les mêmes logements d'une boîte de transport, cela impose des zones de contact avec le capteur à deux positions différentes.

Aussi l'invention concerne un support de mesure 500 pour mouvement d'horlogerie, qui est agencé pour constituer un appui inférieur d'une calotte 200 comportant un mouvement d'horlogerie 400 ou d'une tête de montre 300 comportant un mouvement d'horlogerie 400, dans une position d'appui sous contrainte de la calotte 200 ou de la tête de montre 300 sur le support de mesure 500. Par exemple, cette calotte 200 ou cette tête de montre 300 est poussée vers le support de mesure 500, et maintenue en appui sur le support de mesure 500 par des moyens de compression poussant cette calotte 200 ou sur cette tête de montre 300 du côté opposé au côté d'appui sur le support de mesure 500, notamment par au moins un élément résilient 80 qui est en appui contraint sur cette calotte 200 ou sur cette tête de montre 300 du côté opposé au côté d'appui sur le support de mesure 500.

Ainsi, le support de mesure 500 est agencé pour constituer un appui radial, selon une direction radiale D, d'un organe de commande 410 ou d'une zone d'appui 301, notamment une surface de chant d'une carrure, que comporte une tête de montre 300 comportant un mouvement d'horlogerie 400, ou que comporte un mouvement d'horlogerie 400 renfermé dans une calotte 200 de test, dans une position d'appui radial sous contrainte de cette tête de montre 300 ou respectivement de cette calotte 200 sur ce support de mesure 500.

Selon l'invention, le support de mesure 500 comporte, ou bien dans une première variante une pointe de contact unique 530 selon la direction radiale D, ou bien dans une deuxième variante une paire de pointes de contact latérales 540 symétriques par rapport à la direction radiale D.

Dans la première variante, le support de mesure 500 comporte une telle pointe de contact unique 530 selon la direction radiale D, et comporte un circuit imprimé 52 s'étendant du côté opposé de la pointe de contact unique 530, sensiblement perpendiculairement à la direction radiale D, et la longueur de la pointe de contact unique 530, selon la direction radiale D, est supérieure à une longueur minimale qui est calculée pour empêcher tout contact entre des cornes 320 que comporte une tête de montre 300 et le circuit imprimé 52.

Plus particulièrement, la pointe de contact unique 530 est de révolution par rapport à l'axe D.

Dans la deuxième variante, le support de mesure 500 comporte une paire de pointes de contact latérales 540 symétriques par rapport à la direction radiale D.

Dans une réalisation particulière de l'invention selon cette deuxième variante, ce support de mesure 500 comporte un pavillon 501, qui comporte les deux pointes de mesure latérales 540, et qui est en forme de cloche renversée, avec un profil intérieur conique ou évolutif, dont le côté le plus évasé est tourné vers la calotte 200 ou la tête de montre 300 à contrôler. Ce pavillon 501 guide les vibrations vers une partie plus massive faisant concentrateur 502, qui est solidaire d'un socle 503 sous ou sur lequel est maintenu un capteur de mesure 510 agencé pour écouter la marche et/ou l'amplitude d'un mouvement d'horlogerie 400 renfermé dans une calotte 200 ou une tête de montre 300, dans la position d'appui sous contrainte de cette calotte 200 ou de cette tête de montre 300 sur le support de mesure 500. Et la paire de pointes de contact latérales 540 est dans le prolongement géométrique de ce pavillon 501, ou fait partie de ce pavillon 501, lequel comporte, entre les pointes de contact latérales 540, des échancrures 550 qui sont calculées pour laisser le passage sans contact d'une lunette 310 que comporte une tête de montre 300, ou de tout autre organe rapporté similaire.

Plus particulièrement, la partie intérieure du pavillon 501 est à symétrie de révolution par rapport à la direction radiale D ou/et est sensiblement conique.

Plus particulièrement, tel que visible sur la figure 16, le pavillon 501 présente, à son côté le plus ouvert, un diamètre extérieur DE, inférieur aux entre-cornes DEC des boîtes de montre 300 à mesurer, et, tel que visible sur la figure 15, un diamètre intérieur DI supérieur au diamètre des organes de commande 410, notamment des couronnes, des mouvements 400 enfermés dans les calottes 200 à mesurer, une surface d'appui intérieure 511 du pavillon 501 ou des pointes de contact latérales 540 étant agencée pour recevoir en appui ces organes de commande 410. Cette géométrie répond bien aux contraintes d'encombrement, et rend le support de mesure 500 très polyvalent.

Plus particulièrement, ce capteur de mesure 510 est un capteur piézo.

Pour assurer une bonne transmission du son du mouvement 400 jusqu'au capteur piézo 510, il faut minimiser le nombre d'interfaces, et avoir le meilleur contact possible à chaque interface. La liaison piézo-support de mesure doit donc être rigide, et cela se fait facilement en collant le piézo sur toute sa surface dans ou sur le support de mesure 500, notamment avec une colle rigide type cyanocrylate p.ex. Plus particulièrement, ce capteur de mesure 510 est collé sur toute sa surface de contact avec le socle 503 avec une colle cyanocrylate.

Plus particulièrement, le support de mesure 500 est en matériau dur ou est métallique. En effet, un support de mesure en matériau dur assure une bonne transmission. Les essais montrent notamment de très bons résultats avec un support de mesure en alliage d'aluminium.

Plus particulièrement, le support de mesure 500 est en alliage d'aluminium.

Dans une alternative, le support de mesure 500 est en bronze ou en cupro-aluminium.

Le fait de fixer le capteur piézo 510 sur une pièce rigide comme le support de mesure du support de mesure 500 a pour effet une élévation de la fréquence de résonance de l'ensemble du système capteur (piézo + support de mesure) par rapport à celle du piézo seul. Cela permet de décaler fortement cette fréquence de résonance en dehors de la plage des fréquences mesurées afin d'éviter des comportements chaotiques. Plus particulièrement, le support de mesure 500 est lesté avec une masse inertielle.

Plus particulièrement, le pavillon 501 est à symétrie de révolution par rapport à l'axe D.

La figure 15 montre le contact entre l'extrémité distale 411 de l'organe de commande 410 dans le cas d'une calotte 200, en appui sur une surface d'appui interne 511 du pavillon 501 du support de mesure 500.

La figure 16 montre le contact entre une zone d'appui 301, ici par exemple entre les cornes d'une tête de montre 300, et l'extrémité du pavillon 501 du support de mesure 500.

Plus particulièrement, le socle 503 comporte au moins une fente ou une gorge 504 pour recevoir un câble de liaison 520 ou similaire relié à un module électronique ou similaire, pour la liaison du capteur de mesure 510 avec un module électronique 51, ou bien deux fentes ou gorges 504 symétriques par rapport à l'axe D.

Le socle 503 est de préférence l'élément de fixation à une structure externe, notamment au travers d'une gorge d'une semelle 560 en matériau souple et résilient, et coincé par un bourrelet qui assure son maintien. Ainsi, plus particulièrement, le socle 503 est entouré par une semelle 560 en matériau souple et résilient, de préférence amovible, notamment par clipage, et qui comporte ses seuls moyens de fixation à une structure externe: le socle 503, et donc le support de mesure 500, peut être suspendu tout en restant en appui sous contrainte avec la calotte 200 ou la tête de montre 300.

La géométrie du support de mesure constituant le pavillon 501 doit diriger le son vers le centre du capteur piézo 510. Un contact ponctuel au centre serait probablement idéal. Mais de manière réaliste, la forme en cône inversé est favorable. On pourrait un peu comparer le fonctionnement à celui d'un tambour pour lequel il est clair que le son est bien meilleur et puissant lorsque l'on frappe au centre de la membrane plutôt que sur les bords.

La géométrie en forme de cloche ou de cône inversé résout deux problèmes :
- en apportant la possibilité d'établir un contact entre le capteur 501 et des têtes de montres 300 sur la carrure, ou des mouvements 400 en calotte 200 sur la tige 410, dans le même encombrement;
- en améliorant l'efficacité de la captation du son grâce à la forme qui conduit et concentre les vibrations vers le centre du capteur.

Le support de mesure particulier mis en œuvre par l'invention offre, outre l'avantage d'une mesure de qualité, beaucoup plus fiable qu'un palpage sur une glace ou un fond de boîte de montre, une polyvalence appréciable puisqu'il convient à la fois aux calottes et aux têtes de montre; dans ce dernier cas, l'appui entre cornes est avantageux, et permet de ne pas toucher des surfaces d'aspect de la tête de montre. En somme, l'invention apporte une solution économique au problème de la tenue d'un capteur, notamment un capteur piézo, pour un contrôle de marche et/ou d'amplitude, et qui permet de mieux s'affranchir de la pollution sonore du bruit ambiant que les systèmes actuels.

## Revendications

1. Support de mesure (500) pour mouvement d'horlogerie, agencé pour constituer un appui radial, selon une direction radiale (D), d'un organe de commande (410) ou d'une zone d'appui (301), que comporte une tête de montre (300) comportant un mouvement d'horlogerie (400), ou que comporte un mouvement d'horlogerie (400) renfermé dans une calotte (200) de test, dans une position d'appui radial sous contrainte de ladite tête de montre (300) ou respectivement de ladite calotte (200) sur ledit support de mesure (500), **caractérisé en ce que** ledit support de mesure (500) comporte, ou bien une pointe de contact unique (530) selon ladite direction radiale (D), ou bien une paire de pointes de contact latérales (540) symétriques par rapport à ladite direction radiale (D).

2. Support de mesure (500) selon la revendication 1, **caractérisé en ce que** ledit support de mesure (500) comporte une dite pointe de contact unique (530) selon ladite direction radiale (D), et comporte un circuit imprimé (52) s'étendant du côté opposé de ladite pointe de contact unique (530), sensiblement perpendiculairement à ladite direction radiale (D), et **en ce que** la longueur de ladite pointe de contact unique (530), selon ladite direction radiale (D), est supérieure à une longueur minimale calculée pour empêcher tout contact entre des cornes (320) que comporte une dite tête de montre (300) et ledit circuit imprimé (52).

3. Support de mesure (500) selon la revendication 1, **caractérisé en ce que** ledit support de mesure (500) comporte une dite paire de pointes de contact latérales (540) symétriques par rapport à ladite direction radiale (D).

4. Support de mesure (500) selon la revendication 3, **caractérisé en ce que** ledit support de mesure (500) comporte un pavillon (501) en forme de cloche renversée, dont le côté le plus évasé est tourné vers ladite calotte (200) ou ladite tête de montre (300) à contrôler, lequel pavillon (501) est agencé pour guider les vibrations vers une partie plus massive faisant concentrateur (502), solidaire d'un socle (503) sous lequel est maintenu un capteur de mesure (510) agencé pour écouter la marche et/ou l'amplitude d'un dit mouvement d'horlogerie (400) renfermé dans ladite calotte (200) ou ladite tête de montre (300), dans la position où ledit support de mesure (500) est en appui sous contrainte avec ladite calotte (200) ou ladite tête de montre (300), et **en ce que** la dite paire de pointes de contact latérales (540) est dans le prolongement géométrique dudit pavillon (501), lequel comporte, entre lesdites pointes de contact latérales (540), des échancrures (550) calculées pour laisser le passage sans contact d'une lunette (310) que comporte une dite tête de montre (300).

5. Support de mesure (500) selon la revendication 3 ou 4, **caractérisé en ce que** la partie intérieure dudit pavillon (501) est à symétrie de révolution par rapport à ladite direction radiale (D) ou/et est sensiblement conique.

6. Support de mesure (500) selon la revendication 4 ou 5, **caractérisé en ce que** ledit pavillon (501) présente, à son côté le plus ouvert, à l'extrémité distale desdites pointes de contact latérales (540), un diamètre extérieur (DE), inférieur aux entre-cornes des boîtes de montre (300) à mesurer, et un diamètre intérieur (DI) supérieur au diamètre desdits organes de commande (410) de mouvements (400) enfermés dans des dites calottes (200) à mesurer, une surface d'appui intérieure (511) dudit pavillon (501) ou desdites pointes de contact latérales (540) étant agencée pour recevoir en appui lesdits organes de commande (410).

7. Support de mesure (500) selon l'une des revendications 1 à 6, **caractérisé en ce que** ledit organe de commande (410) est une couronne.

8. Support de mesure (500) selon l'une des revendications 1 à 7, **caractérisé en ce que** ladite zone d'appui (301) est une surface de chant d'une carrure que comporte une dite tête de montre (300).

9. Support de mesure (500) selon l'une des revendications 1 à 8, **caractérisé en ce que** ledit capteur de mesure (510) est un capteur piézo.

10. Support de mesure (500) selon l'une des revendications 1 à 9, **caractérisé en ce que** ledit capteur de mesure (510) est collé sur toute sa surface de contact avec ledit socle (503) avec une colle cyanocrylate.

11. Support de mesure (500) selon l'une des revendications 1 à 10, **caractérisé en ce que** ledit socle (503) comporte au moins une fente (504) agencée pour recevoir un câble de liaison (520) pour la liaison dudit capteur de mesure (510) avec un module électronique (51) ou un circuit imprimé (52).

12. Support de mesure (500) selon l'une des revendications 1 à 11, **caractérisé en ce que** ledit support de mesure (500) est en alliage d'aluminium.

13. Support de mesure (500) selon l'une des revendications 1 à 12, **caractérisé en ce que** ledit support de mesure (500) est lesté avec une masse inertielle.

14. Support de mesure (500) selon l'une des revendications 1 à 13, **caractérisé en ce que** ledit socle (503) est entouré par une semelle (560) en matériau souple et résilient comportant ses seuls moyens de fixation à une structure externe.

## Patentansprüche

1. Messstütze (500) für ein Uhrwerk (400), ausgebildet, um ein Bedienorgan (410) oder einen Auflagebereich (301) in einer radialen Richtung (D) abzustützen, den ein Uhrenkopf (300), der ein Uhrwerk (400) umfasst, oder ein in einer Prüfkalotte (200) aufgenommenes Uhrwerk (400) aufweist, wobei der Uhrenkopf (300) bzw. die Prüfkalotte (200) in einer radialen Abstützposition unter Anpresskraft an der Messstütze (500) anliegt, **dadurch gekennzeichnet, dass** die Messstütze (500) entweder eine einzelne Kontaktspitze (530) in der radialen Richtung (D) oder ein Paar seitliche Kontaktspitzen (540) umfasst, die bezüglich der radialen Richtung (D) symmetrisch sind.

2. Messstütze (500) nach Anspruch 1, **dadurch gekennzeichnet, dass** die Messstütze (500) eine einzelne Kontaktspitze (530) in der radialen Richtung (D) umfasst und eine Leiterplatte (52) umfasst, die sich auf der der einzelnen Kontaktspitze (530) gegenüberliegenden Seite im Wesentlichen senkrecht zur radialen Richtung (D) erstreckt, und dass die Länge der einzelnen Kontaktspitze (530) in der radialen Richtung (D) größer ist als eine Mindestlänge, die so bemessen ist, dass jeder Kontakt zwischen Hörnern (320), die der Uhrenkopf (300) aufweist, und der Leiterplatte (52) verhindert wird.

3. Messstütze (500) nach Anspruch 1, **dadurch gekennzeichnet, dass** die Messstütze (500) ein Paar seitliche Kontaktspitzen (540) umfasst, die bezüglich der radialen Richtung (D) symmetrisch sind.

4. Messstütze (500) nach Anspruch 3, **dadurch gekennzeichnet, dass** die Messstütze (500) einen Pavillon (501) in Form einer umgedrehten Glocke umfasst, dessen am weitesten aufgeweitete Seite zu der zu prüfenden Prüfkalotte (200) bzw. dem zu prüfenden Uhrenkopf (300) gerichtet ist, wobei der Pavillon (501) dazu eingerichtet ist, die Vibrationen zu einem massiveren Teil zu führen, der als Konzentrator (502) ausgebildet und mit einem Sockel (503) verbunden ist, unter dem ein Messsensor (510) gehalten wird, der dazu eingerichtet ist, den Gang und/oder die Amplitude eines Uhrwerks (400) abzuhören, das in der Prüfkalotte (200) bzw. dem Uhrenkopf (300) aufgenommen ist, in der Position, in der die Messstütze (500) unter Anpresskraft an der Prüfkalotte (200) bzw. dem Uhrenkopf (300) anliegt, und dass das Paar seitlicher Kontaktspitzen (540) in der geometrischen Verlängerung des Pavillons (501) angeordnet ist, wobei der Pavillon (501) zwischen den seitlichen Kontaktspitzen (540) Ausnehmungen (550) aufweist, die so ausgelegt sind, dass eine Lünette (310), die der Uhrenkopf (300) aufweist, berührungslos hindurchgeführt werden kann.

5. Messstütze (500) nach Anspruch 3 oder 4, **dadurch gekennzeichnet, dass** der innere Bereich des Pavillons (501) rotationssymmetrisch bezüglich der radialen Richtung (D) ist und/oder im Wesentlichen konisch ist.

6. Messstütze (500) nach Anspruch 4 oder 5, **dadurch gekennzeichnet, dass** der Pavillon (501) an seiner am weitesten geöffneten Seite am distalen Ende der seitlichen Kontaktspitzen (540) einen Außendurchmesser (DE) aufweist, der kleiner ist als der Hörnerabstand der zu messenden Uhrenköpfe (300), und einen Innendurchmesser (DI) aufweist, der größer ist als der Durchmesser der Bedienorgane (410) von Uhrwerken (400), die in zu messenden Prüfkalotten (200) aufgenommen sind, wobei eine innere Auflagefläche (511) des Pavillons (501) oder der seitlichen Kontaktspitzen (540) dazu eingerichtet ist, die Bedienorgane (410) abzustützen.

7. Messstütze (500) nach einem der Ansprüche 1 bis 6, **dadurch gekennzeichnet, dass** das Bedienorgan (410) eine Krone ist.

8. Messstütze (500) nach einem der Ansprüche 1 bis 7, **dadurch gekennzeichnet, dass** der Auflagebereich (301) eine Kantenfläche eines Gehäusemittelteils ist, das der Uhrenkopf (300) aufweist.

9. Messstütze (500) nach einem der Ansprüche 1 bis 8, **dadurch gekennzeichnet, dass** der Messsensor (510) ein Piezosensor ist.

10. Messstütze (500) nach einem der Ansprüche 1 bis 9, **dadurch gekennzeichnet, dass** der Messsensor (510) über seine gesamte Kontaktfläche mit dem Sockel (503) mit einem Cyanoacrylatklebstoff verklebt ist.

11. Messstütze (500) nach einem der Ansprüche 1 bis 10, **dadurch gekennzeichnet, dass** der Sockel (503) mindestens einen Schlitz (504) umfasst, der dazu eingerichtet ist, ein Verbindungskabel (520) zur Verbindung des Messsensors (510) mit einem Elektronikmodul (51) oder einer Leiterplatte (52) aufzunehmen.

12. Messstütze (500) nach einem der Ansprüche 1 bis 11, **dadurch gekennzeichnet, dass** die Messstütze (500) aus einer Aluminiumlegierung besteht.

13. Messstütze (500) nach einem der Ansprüche 1 bis 12, **dadurch gekennzeichnet, dass** die Messstütze (500) mit einer Trägheitsmasse beschwert ist.

14. Messstütze (500) nach einem der Ansprüche 1 bis 13, **dadurch gekennzeichnet, dass** der Sockel (503) von einer Sohle (560) aus einem weichen und elastisch rückstellfähigen Material umgeben ist, welche die einzigen Mittel zur Befestigung an einer externen Struktur umfasst.

## Claims

1. Measuring support (500) for a watch movement, designed to constitute a radial support, in a radial direction (D), of a control member (410) or of a support zone (301), which is comprised by a watch head (300) comprising a watch movement (400), or which is comprised by a watch movement (400) enclosed in a test cap (200), in a position of radial support under stress of said watch head (300) or respectively of said cap (200) on said measuring support (500), **characterized in that** said measuring support (500) comprises either a single contact point (530) in said radial direction (D), or a pair of lateral contact points (540) that are symmetrical with respect to said radial direction (D).

2. Measuring support (500) according to claim 1, **characterized in that** said measuring support (500) comprises a said single contact point (530) in said radial direction (D), and comprises a printed circuit (52) extending on the opposite side to said single contact point (530), substantially perpendicular to said radial direction (D), and **in that** the length of said single contact point (530), in said radial direction (D), is greater than a minimum length calculated to prevent contact between horns (320) comprised by a said watch head (300) and said printed circuit (52).

3. Measuring support (500) according to claim 1, **characterized in that** said measuring support (500) comprises a said pair of lateral contact points (540) that are symmetrical with respect to said radial direction (D).

4. Measuring support (500) according to claim 3, **characterized in that** said measuring support (500) comprises an inverted bell-shaped mouth (501), the widest side of which is turned towards said cap (200) or said watch head (300) to be inspected, which mouth (501) is designed to guide the vibrations towards a more massive concentrator part (502), integral with a base (503) under which is held a measuring sensor (510) designed to listen to the rate and/or amplitude of a said watch movement (400) enclosed in said cap (200) or said watch head (300), in the position where said measuring support (500) rests under stress against said cap (200) or said watch head (300), and **in that** said pair of lateral contact points (540) is in the geometric extension of said mouth (501), which comprises, between said lateral contact points (540), indentations (550) designed to allow the contactless passage of a bezel (310) which a said watch head (300) comprises.

5. Measuring support (500) according to claim 3 or 4, **characterized in that** the inner part of said mouth (501) is rotationally symmetrical with respect to said radial direction (D) or/and is substantially conical.

6. Measuring support (500) according to claim 4 or 5, **characterized in that** said mouth (501) has, at its most open side, at the distal end of said lateral contact points (540), an external diameter (DE), smaller than the horn width of the watch cases (300) to be measured, and an internal diameter (DI) greater than the diameter of said control members (410) of movements (400) enclosed in said caps (200) to be measured, an inner support surface (511) of said mouth (501) or of said lateral contact points (540) being designed to receive said control members (410) in abutment.

7. Measuring support (500) according to any of claims 1 to 6, **characterized in that** said control member (410) is a crown.

8. Measuring support (500) according to any of claims 1 to 7, **characterized in that** said support zone (301) is an edge surface of a middle comprised by a said watch head (300).

9. Measuring support (500) according to any of claims 1 to 8, **characterized in that** said measuring sensor (510) is a piezo sensor.

10. Measuring support (500) according to any of claims 1 to 9, **characterized in that** said measuring sensor (510) is glued over its entire contact surface with said base (503) with a cyanoacrylate glue.

11. Measuring support (500) according to any of claims 1 to 10, **characterized in that** said base (503) comprises at least one slot (504) designed to receive a connecting cable (520) for connecting said measuring sensor (510) to an electronic module (51) or a printed circuit (52).

12. Measuring support (500) according to any of claims 1 to 11, **characterized in that** said measuring support (500) is made of aluminum alloy.

13. Measuring support (500) according to any of claims 1 to 12, **characterized in that** said measuring support (500) is weighted with an inertial mass.

14. Measuring support (500) according to any of claims 1 to 13, **characterized in that** said base (503) is surrounded by a soleplate (560) of flexible, resilient material comprising its sole means of attachment to an external structure.
